**Europäisches Patentamt**

**European Patent Office**

**Office européen des brevets**

(11) Publication number: **0 129 398**
**A2**

## (12) EUROPEAN PATENT APPLICATION

(21) Application number: **84303980.1**

(22) Date of filing: **13.06.84**

(51) Int. Cl.³: **B 60 R 16/02**

(30) Priority: **21.06.83 GB 8316791**
**25.08.83 GB 8322870**

(43) Date of publication of application:
**27.12.84 Bulletin 84/52**

(84) Designated Contracting States:
**AT BE CH DE FR GB IT LI NL SE**

(71) Applicant: **RIPAULTS LIMITED**
**Southbury Road**
**Enfield Middlesex EN1 1UE(GB)**

(72) Inventor: **Sawyer, Nicholas John**
**60, Exeter Road**
**Southgate London(GB)**

(74) Representative: **Freed, Arthur Woolf et al,**
**MARKS & CLERK 57-60 Lincoln's Inn Fields**
**London WC2A 3LS(GB)**

(54) A remote control and monitoring system.

(57) A remote control and monitoring system has a master control unit and a plurality of slave units (1). Each slave unit (1) has a control circuit (2) for receiving signals from and transmitting signals to the master unit and a plurality of control and sensor units (3). Each control and sensor unit (3) comprises a transistor (TR2) connected in series with a component to be controlled or whose condition is to be sensed and is connected to the control circuit (2) for receiving drive signals therefrom. Each control and sensor unit (2) also includes a comparator (A2) connected to sense the current through the transistor (TR2). The control circuit (2) is connected to the comparator (A2) and is arranged to produce a fault signal when current exceeding a predetermined value continues to flow through the transistor (TR2) for more than a predetermined period after the beginning of a drive signal thereto.

FIG.1.

M&C FOLIO:                          WANGDOC: 0180b

## A REMOTE CONTROL AND MONITORING SYSTEM

This invention relates to a remote control and monitoring system.

It has previously been proposed to use a remote control and monitoring system in a motor vehicle and an example of such a remote control and monitoring system is described in European Patent Application No. 0033664 in our name.  In that control system there is provided a master control unit connected to switches on a dashboard and slave units arranged in the vicinity of the components to be energised, the slave units being connected by signal lines to the master computing unit.  Further, each slave unit controls components through switch means in dependence upon instructions received through the signal lines from the master unit and each slave unit is arranged to send to the master unit, a signal indicative of correct or incorrect operation of at least one component it controls through switch means.

It is an object of this invention to provide an improved slave unit for use in a remote control and monitoring system.

According to this invention there is provided a slave unit for use in a remote control and monitoring system having a master unit, the slave unit comprising a control circuit for receiving signals from and transmitting signals to the master unit and a plurality of control and sensing units each connected to a component to be controlled or whose condition is to be sensed, each control and sensing unit comprising a transistor connected in series with a component to be controlled or whose condition is to be sensed and connected to the control circuit for receiving drive signals therefrom, and sensing means connected to sense the current through the transistor, the control circuit being connected to the sensing means and arranged to produce a fault signal when current exceeding a predetermined value continues to flow through the transistor for more than a predetermined period after the beginning of a drive signal thereto.

If the component connected to the transistor is an inductive load, e.g. a motor winding, or is in the form of a lamp which takes some time to warm up, then in the event that a current exceeding the predetermined value continues to flow through the transistor for more than the predetermined period this is indicative that the component has failed.

Preferably, the component is arranged to be connected in series with the collector-emitter path of the transistor between supply terminals with the sensing means connected to the junction between the transistor and that component.

Preferably, the sensing means comprises a two-input comparator, one input of which is connected to the junction between the transistor and the component, and the slave unit comprises a monitoring transistor whose collector-emitter path is connected in series with a load between supply terminals, the junction between the monitoring transistor and its load being connected to the other input of the comparator of each control and sending unit.

Preferably, the control circuit renders the monitoring transistor cyclically conductive and non-conductive and monitors the output of the sensing means when the monitoring transistor is conductive and when it is non-conductive.

Considering a single control and sensing unit, in the event that the transistor is not in receipt of the drive signal no current can be passing through the component which acts as a load but nevertheless the potential of the junction between the transistor and the component will depend on whether or not the component is open circuit. The comparator compares the potential of the junction of the transistor and the component with the potential of the junction of the monitoring transistor and its load and thereby its output signal is an indication whether or not that component is open circuit.

In the event that the transistor does receive the drive signal then current should be passing through the component connected in series with the collector-emitter path of the transistor. The potential of the junction of the transistor and its associated component will depend on the current passing through the transistor and will change significantly in the event of a short circuit of the component. The potential of the junction of the transistor and the component while the transistor is in receipt of a drive signal is thus dependent on whether or not the component has been short circuited and this potential is compared by the comparator with the potential at the junction of the monitoring transistor and its load. By this comparison during the period that the transistor receives a drive signal it is ascertained whether or not the component is short circuited.

Rendering the monitoring transistor cyclically conductive and non-conductive and monitoring the output of the sensing means when the monitoring means is both conductive and non-conductive, makes it possible to sense both short circuits and open circuits.

The slave unit is preferably for use with a remote control and monitoring system having a plurality of sockets, each socket having terminals interconnected by a unique pattern of conductors, the slave unit comprising a plug having a plurality of terminals which engage the terminals of a socket when the plug of the slave unit is inserted into that socket, the control circuit being capable of recognising by the conduction pattern between the terminals of the socket into which the plug has been inserted, which components are connected to that socket.

In a preferred embodiment of the invention the control circuit includes a timer and is arranged, in the event that it does not receive any signals from the master unit for a further predetermined period as measured by the timer, to energise (if not energised) at least one predetermined controller controlled by that slave unit and/or to de-energise (if not energised) at least one other predetermined component controlled by that slave unit.

An embodiment of this invention will now be described, by way of example only, with reference to the accompanying drawings of which:-

Fig. 1 is a circuit diagram of a slave unit of a remote control and monitoring unit which is located in a vehicle and is in accordance with this invention; and

6

Figures 2A and 2B are flow charts of a control circuit contained within the slave unit.

The remote control and monitoring system includes a master control unit (not shown) connected to a plurality of sockets located in various positions around the vehicle; the master control unit includes a computer. A slave unit 1 is fitted into each socket and includes a control circuit 2 and eight drive and sensor units 3; the eight drive and sensor units 3 have their inputs connected to the control circuit 2 over lines P10 to P17. Each drive and sensor unit 3 has an output connected to a respective load, the eight outputs being designated as O/P0 to O/P7. The sensor outputs of the eight drive and sensor units 3 are connected to the control circuit 2 over lines P00 to P07 respectively.

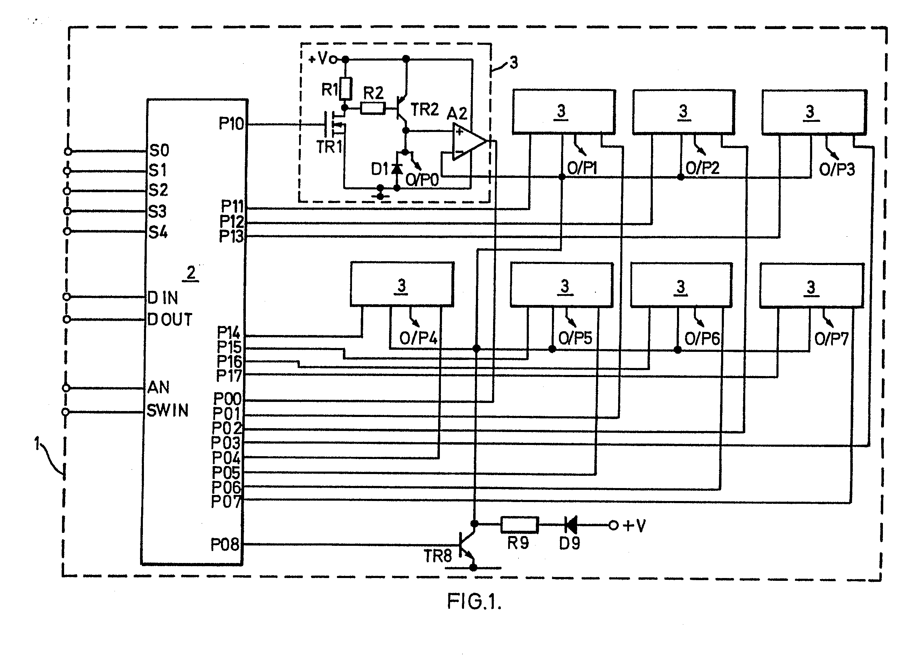

Each drive and sensor unit 3 comprises an input transistor TR1 in the form of an FET whose gate is connected to its input line and in the case of the drive and sensor unit 3 shown in Figure 1 in detail, the gate of the transistor TR1 is connected to the line P10. The drain of the transistor TR1 is connected through a resistor R1 to a positive supply terminal +V and its source is connected to earth. The drain of the transistor TR1 is also connected through a resistor R2 to the base of a transistor TR2, whose emitter is connected to the positive terminal +V and whose collector is connected firstly through output O/PO and a load to earth and secondly through a reverse connected diode Dl to earth. The collector of the transistor TR2 is also connected to the positive input of a comparator A2 whose output is the sensor output of the drive and sensor unit 3 and, in the case of the unit 3 shown in detail in Figure 1, is connected to the line POO.

The base of a monitoring transistor TR8 is connected to a line PO8 of the control circuit 2 and has its emitter connected to earth. The collector of the transistor TR8 is connected through resistor R9 and a diode D9 to the positive terminal +V and is also connected to the negative input of the comparator A2 of each drive and sensor unit 3.

The manner in which the drive and sensor unit 3 energises its load and detects open circuits, short circuits and overloads will now be described. Firstly, considering the unit 3 shown in detail, when line PlO is low, transistor TRl is cut off and consequently transistor TR2 is cut off. Consequently no current is supplied to the load connected to O/PO. If however line PlO is high, transistor TRl is turned on as is transistor TR2 and current is supplied to the load connected to O/PO.

Assuming that line P1O is low, then transistors TR1 and TR2 will be cut off. Assuming the monitoring transistor TR8 is conducting then the negative input to the comparator A2 will receive a signal of approximately 0.2V which is the saturation voltage of the transistor TR8. In this case if the input signal to the positive input of the comparator A2 is less than 0.2V as will be the case if a load is connected to 0/PO then the output of the comparator A2 will be a logic O which is supplied to line POO and is recognised by the control circuit 2 as a non-fault condition. If, however, the load was for some reason open circuited, the signal supplied to the positive input of the comparator A2 would be approximately equal to the supply voltage and the output of the comparator A2 will switch to logic 1. This is supplied over line POO to the control circuit 2 which recognises the open circuit condition. Monitoring takes place continuously whenever a low voltage is supplied to line P1O. In the event that line P1O is high thus driving the load connected to 0/PO, the voltage on line P1O is brought low every few seconds for open circuit monitoring to take place. This does, of course, switch off the load but the actual time the circuit is off for the purpose of this test is only a few tens of microseconds and the effect of switching the load off for such a short period is not noticeable to the user.

Assuming now that line P10 is high, that is to say, the load connected to O/P0 is energised, then transistors TR1 and TR2 will be turned on. It is assumed that the monitoring transistor TR8 is conducting so that the signal applied to the negative input of the transistor A2 is 0.2V. The control circuit 2 is arranged to examine the output of the comparator A2 at intervals of approximately 0.1 seconds. If the load is not short circuited then the load voltage will be greater than 0.2V with the result that the output of the comparator A2 will be a logic 1 which is supplied to the control circuit 2 over line P00 in the case of the unit 3 shown in detail in Figure 1. This is recognised by the control circuit 2 at a non-fault condition. In the event that the load has been short circuited, then the signal applied to the positive input of the comparator A2 will be less than 0.2V and the output of the comparator A2 will be logic 0. This is recognised by the control circuit 2 as a short circuit condition and it does, on recognising this condition twice in succession switch the signal on line P10 to de-energise the load and therefore protect the transistor TR2; this fault condition is also transmitted to the master control unit. Because a short circuit condition can result in a very high current, it is desirable to recognise a short circuit condition after not greater than 0.1 seconds.

The distinction between a short circuit current and an overload current is that the overload current is higher than the normal load current but is lower than the short circuit current. An overload current will of course occur when a load is first switched on and thus it is necessary to ensure that the control circuit 2 does not recognise an overload current as a fault unless it persists beyond the period which will normally occur on switch on of a load. To detect overload, the monitoring transistor TR8 is turned off so that the potential at its collector rises to the supply voltage less 0.7V which is due to diode D9 and resistor R9. This potential of the supply voltage less 0.7V is supplied to the negative input of each comparator A2. Assuming that the line P10 is high then if the output of the comparator A2 is at logic 1 then the voltage drop across the transistor TR2 is less than 0.7V and no overload condition exists. If however output of the comparator A2 is logic 0, then the voltage drop across the transistor TR2 must be greater than 0.7V and an overload condition exists. Control circuit 2 receives its output over line P00 but for the purposes of monitoring overload it is arranged to examine the signal on P00 only every 0.5 seconds approximately as an overload can be expected to exist when certain loads are switched on, especially a load such as a headlamp which requires time to heat up. In the event that an overload is detected in that the output of comparator A2 remains at logic 0 for more than 0.5 seconds the signal applied to P10 is rendered low and a fault reported to the central computer. For this purpose the transistor TR8 is cut off every 0.5 seconds by bringing the signal on line PO8 low for a short period.

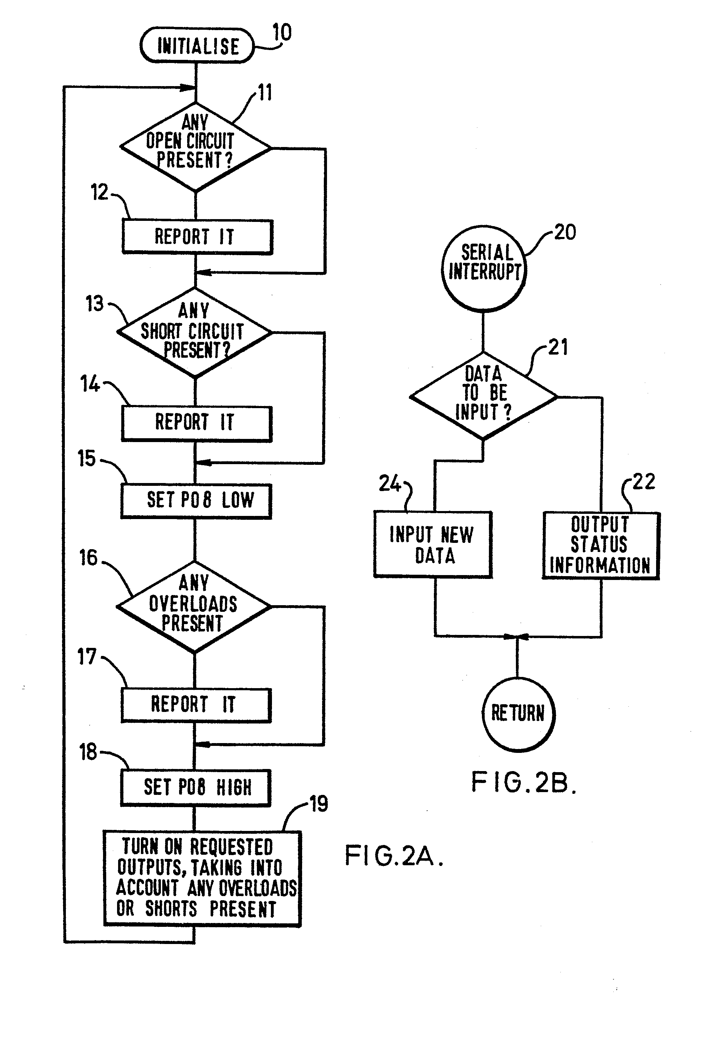

Referring now to Figure 2A which shows the main routine of each control circuit 2, on switch on there is initialisation step 10 followed by a step 11 in which it is detected whether any open circuit is present. As will be clear from the foregoing this is done by bringing all the lines P10 to P17 to low if they were not already low. The outputs on line P11 to P17 are monitored by the control circuit 2 and reported in the next step which is 12. In the event that there are no open circuits present, or alternatively after the report step 12, the routine proceeds to the next step 13 which is to detect whether any short circuit is present. This is done only on any unit 3 whose input line has been requested to go high, and is done by detecting whether the output of the respective comparator A2 is at logic 1. In the event that a short circuit exists, this is reported in the next step 14 and the appropriate unit 3 has its input line brought low to switch off the transistor TR2. Following the step 14 or following the step 13 in the event that no short circuit is detected, the transistor TR8 is cut off by bringing the level of the line PO8 low. All the units 3 whose input signals are high are monitored and a fault is detected when logic 0 occurs and also occurred in the cycle which occurred approximately 0.5 seconds previously. For this purpose a memory is included within the control circuit 2 which considers the output of the unit 3 during the previous overload monitoring step 16. In the event that an overload is detected the appropriate input signal is brought low and the fault is reported to the master control unit; this is done in step 17. Following step or following the monitoring of overloads in the event there is no overload, the output on PO8 is brought high in step 18. All the requested loads are then energised in step 19, the signals designating the required loads being supplied from the master control unit. However, any unit 3 which has been detected as faulty keeps its input held low. The routine then reverts to step 11 and the routine is repeated.

For communications purpose an interrupt routine is provided and is illustrated in Figure 2B. The decision being made is in fact whether to receive new information from the master ready for output to units 3, or whether the master is requesting that status information is sent back to it, i.e. data on any open-circuits, short circuits or overloads present. For these purposes there is a serial interrupt 20, decision step 21 as the result of it there are two possible decisions, that is input new data 24 or output status information 22.

The terminals S0 to S4 appear in a plug of the slave unit 1 designed to be inserted into a socket in a particular position in the vehicle. The socket includes a unique pattern of conductive lines between terminal S0 and terminals S1 to S4 and on switch on a particular signal appears on lines S0 and is applied by the conductive pattern to the terminals S1 to S4. The control circuit 2 includes a programme for recognising by the voltage pattern appearing at terminals S1 to S4, the position of the vehicle of the slave unit. The signal is applied to S0 on each occasion on which the vehicle is started. This feature is desirable because the slave unit may be put into a number of different positions in the vehicle and may have to control different items of equipment in different positions.

The master control unit may have to carry out different functions for different versions of the same car model. For this purpose the master control unit has a similar arrangement to the terminals S0 to S4 and on insertion of the master control unit into a particular version of a car, the master control unit goes through a program routine to establish the precise version of the model into which it has been inserted and can therefore carry out its appropritate control functions.

It should be noted that the output terminals of O/PO to O/P7 may have switches instead of driven loads connected to them. The control circuit 2 can detect the signals applied to the lines POO to PO7 to ascertain whether or not a switch connected to the output is opened or closed.

The control circuit may be programmable or may be a custom design unit which is not programmable.

The slave unit 1 may have various self-test features with various tests being carried out when a particular code is supplied to its input through the master control circuit. Such tests may be used for testing the slave unit both in production and service.

The control unit 2/ receives signals from the master unit over the lines DIN and DOUT on a cyclic basis. The cycle is timed by a timer contained within the control circuit 2. In the event that the predetermined period is exceeded without a signal being received over the lines DIN and DOUT, a particular one of the units 3 energises (if de-energised) its associated component, four of the units 3 de-energises their associated components (if energised) and the other three units 3 remain in the condition they were prior to the detection of failure to receive a signal.

This feature is particularly useful in a vehicle where the slave units may, for example, be arranged to control essential equipment of the vehicle such as the ignition and the control and sensing unit 3 connected to the ignition will be arranged to ensure that the ignition remains energised should the signal fail to be received from the master unit for the predetermined period.

## CLAIMS

1. A slave unit (1) for use in a remote control and monitoring system having a master unit, the slave unit (1) comprising a control circuit (2) for receiving signals from and transmitting signals to the master unit and a plurality of control and sensing units (3) each connected to a component to be controlled or whose condition is to be sensed, characterised in that each control and sensing unit (3) comprises a transistor (TR2) connected in series with a component to be controlled or whose condition is to be sensed and connected to the control circuit (A2) for receiving drive signals therefrom, and sensing means (A2) connected to sense the current through the transistor (TR2), the control circuit (2) being connected to the sensing means (A2) and arranged to produce a fault signal when current exceeding a predetermined value continues to flow through the transistor (TR2) for more than a predetermined period after the beginning of a drive signal thereto.

2. A slave unit according to claim 1 characterised in that the component is arranged to be connected in series with the collector-emitter path of the transistor (TR2) between supply terminals with the sensing means (A2) connected to the junction between the transistor (TR2) and that component.

3. A slave unit according to claim 2, characterised in that the sensing means comprises a two-input comparator (A2), one input of which is connected to the junction between the transistor (TR2) and the component, and by a monitoring transistor (TR8) whose collector-emitter path is connected in series with a load (R9, D9) between supply terminals, the junction between the monitoring transistor (TR8) and its load (R9, D9) being connected to the other input of the comparator (A2) of each control and sensing unit (3).

4. A slave unit according to claim 3, characterised in that the control circuit (2) renders the monitoring transistor (TR8) cyclically conductive and non-conductive and monitors the output of the sensing means (A2) when the monitoring transistor is conductive and when it is non-conductive.

5. A slave unit according to any of claims 1 to 4, characterised in that the control circuit (2) includes an analogue-to-digital converter.

6. A slave unit according to any of claims 1 to 5, for use with a remote control and monitoring system having a plurality of sockets, characterised in that each socket has terminals interconnected by a unique pattern of conductors, the slave unit comprising a plug having a plurality of terminals which engage the terminals of a socket when the plug of the slave unit is inserted into that socket, the control circuit (2) being capable of recognising by the conduction pattern between the terminals of the socket into which the plug has been inserted, which components are connected to that socket.

7.   A slave unit according to any of claims 1 to 6, characterised in that the control circuit (2) includes a timer and is arranged, in the event that it does not receive any signals from the master unit for a further predetermined period as measured by the timer, to energise (if not energised) at least one predetermined component controlled by that slave unit (1) and/or to de-energise (if not energised) at least one other predetermined component controlled by that slave unit (1).

8.   A slave unit according to claim 7, characterised in that the control circuit (2) is arranged to energise (if not energised) one predetermined component through its associated control and sensor unit (3), and to de-energise (if energised) a plurality of predetermined components through their associated control and sensor units (3) in the event that the control circuit (2) does not receive a signal from the master unit for said further predetermined period.

9.   A slave unit according to claim 8, characterised in that further components remain energised or de-energised without changing their condition in the event the control circuit (2) does not receive a signal from the master unit for the further predetermined period.

10. A remote control and monitoring system having a
master unit and a plurality of slave units according to
any of claims 1 to 10.

FIG.1.

0129398

INITIALISE — 10

ANY OPEN CIRCUIT PRESENT? — 11

REPORT IT — 12

ANY SHORT CIRCUIT PRESENT? — 13

REPORT IT — 14

SET PO8 LOW — 15

ANY OVERLOADS PRESENT — 16

REPORT IT — 17

SET PO8 HIGH — 18

TURN ON REQUESTED OUTPUTS, TAKING INTO ACCOUNT ANY OVERLOADS OR SHORTS PRESENT — 19

FIG.2A.

SERIAL INTERRUPT — 20

DATA TO BE INPUT ? — 21

INPUT NEW DATA — 24

OUTPUT STATUS INFORMATION — 22

RETURN

FIG.2B.